# EUROPÄISCHE PATENTANMELDUNG

(11) **EP 1 609 692 A2**
(43) Veröffentlichungstag der Anmeldung: **28.12.2005**
(21) Anmeldenummer: 05012897.4
(22) Anmeldetag: 15.06.2005
(51) Int. Cl.: B62D 1/10

(54) **Getriebe für eine Fahrzeuglenkvorrichtung mit feststehendem Mittelteil**

(30) Priorität: 23.06.2004 DE 202004009837 U
(71) Anmelder: TRW Automotive Safety Systems GmbH, 63743 Aschaffenburg (DE)
(72) Erfinder: Fäth, Stefan, 63743 Aschaffenburg (DE)
(74) Vertreter: Strass, Jürgen

(57) **Zusammenfassung**

Ein Getriebe für eine Fahrzeuglenkvorrichtung mit feststehendem Mittelteil umfaßt ein an einen Achsenabschnitt (68) gekoppeltes Ritzel (64; 66). Das Ritzel (64; 66) ist aus zwei verzahnten Ritzelteilen (104, 108; 106, 110) gebildet. Die beiden Ritzelteile (104, 108; 106, 110) sind mittels eines Federelements (114; 116) gegeneinander verspannt. Ein solches Getriebe ist Bestandteil einer Lenkvorrichtung mit einem drehfest an eine Lenksäule gekoppelten Lenkradteil.

## Beschreibung

Die Erfindung betrifft ein Getriebe für eine Fahrzeuglenkvorrichtung mit feststehendem Mittelteil, mit einem an einen Achsenabschnitt gekoppelten Ritzel. Die Erfindung betrifft ferner eine Lenkvorrichtung mit einem drehfest an eine Lenksäule gekoppelten Lenkradteil, einem gegenüber einer Drehung des Lenkradteils feststehenden Mittelteil und einem erfindungsgemäßen Getriebe.

Lenkvorrichtungen mit feststehendem Mittelteil haben grundsätzlich den Vorteil, daß auf dem Mittelteil angebrachte Bedienelemente unabhängig von der Lenkradstellung immer an der gleichen Stelle zu finden sind. Außerdem muß der Gassack eines in einem feststehenden Mittelteil untergebrachten Gassackmoduls muß nicht mehr notwendigerweise symmetrisch zum Drehzentrum der Lenkvorrichtung gestaltet sein. Da die Orientierung des sich aus dem feststehenden Mittelteil entfaltenden Gassacks von vorneherein feststeht, können asymmetrische Gassackformen mit besseren Rückhalteeigenschaften eingesetzt werden.

Aus der DE-A-34 13 009, der DE-A-34 06 327 und der DE-A-35 29 832 sind Lenkräder mit einem gattungsgemäßen Getriebe bekannt, das für eine gegenläufige Übertragung der Drehung des drehfest an die Lenksäule gekoppelten Lenkradteils auf den davon entkoppelten Mittelteil des Lenkrads sorgt. Somit dreht sich der Mittelteil effektiv nicht mit dem Lenkradteil mit, sondern bleibt ortsfest. Nachteilig bei einem solchen Getriebe ist, daß es selbst bei niedrig angesetzten Toleranzgrenzen ein Getriebespiel, das insbesondere bei einem Wechsel der Lenkraddrehrichtung zu einem unerwünschten Wackeln führt, nicht ausgeschlossen werden kann.

Aufgabe der Erfindung ist es, bei einer Lenkvorrichtung mit feststehendem Mittelteil auf kostengünstige Weise eine spielfreie Lenkung zu ermöglichen.

Gelöst wird diese Aufgabe durch ein Getriebe mit den Merkmalen des Anspruchs 1. Die Verspannung der beiden Ritzelteile mittels des Federelements sorgt auf einfache Weise dafür, daß immer eines der verzahnten Ritzelteile gegen den Zahnkranz gedrückt wird, mit dem das Ritzel kämmt. Die Verzahnungen des Ritzels und des Zahnkranzes können daher mit relativ großen Toleranzen hergestellt werden, da die Verspannung der beiden Ritzelteile gegeneinander auch bei einem Wechsel der Lenkraddrehrichtung für einen spielfreien Lauf des Getriebes sorgt.

Gemäß der bevorzugten Ausführungsform der Erfindung ist das erste Ritzelteil ein drehfest mit dem Achsenabschnitt verbundener Ritzelgrundkörper, und das zweite Ritzelteil ist eine konzentrisch zum Ritzelgrundkörper angeordnete Ritzelscheibe, in die ein erstes Ende des Federelements eingreift.

Mit einem Getriebe, bei dem auf dem Achsenabschnitt ein zweites Ritzel angeordnet ist, das den gleichen Aufbau wie das erste Ritzel aufweist, kann eine spielfreie gegenläufige Übertragung der Drehung des drehfest an die Lenksäule gekoppelten Lenkradteils auf den davon entkoppelten Mittelteil des Lenkrads gewährleistet werden.

Weitere vorteilhafte und zweckmäßige Ausgestaltungen des erfindungsgemäßen Getriebes sind in den Unteransprüchen 6 und 7 angegeben.

Die Erfindung schafft auch eine Lenkvorrichtung mit einem drehfest an eine Lenksäule gekoppelten Lenkradteil, einem gegenüber einer Drehung des Lenkradteils feststehenden Mittelteil und einem erfindungsgemäßen Getriebe.

Vorteilhafte und zweckmäßige Ausgestaltungen der erfindungsgemäßen Lenkvorrichtung sind in den Unteransprüchen 9 und 10 angegeben.

Weitere Merkmale und Vorteile der Erfindung ergeben sich aus der nachfolgenden Beschreibung zweier Ausführungsbeispiele und aus den beigefügten Zeichnungen, auf die Bezug genommen wird. In den Zeichnungen zeigen:
Figur 1 eine Draufsicht einer ersten Lenkvorrichtung;
Figur 2 eine Schnittansicht entlang der Linie A-A aus Fig. 1;
Figur 3 eine Schnittansicht entlang der Linie B-B aus Fig. 1;
Figuren 4a, 4b eine vergrößerte Ansicht eines Teils eines Getriebes in transparenter perspektivischer bzw. seitlicher Ansicht;
Figuren 5a und 5b vergrößerte Detailansichten der ersten Lenkvorrichtung vor bzw. nach der Montage des Gassackmoduls; und
Figur 6 eine Schnittansicht einer zweiten Lenkvorrichtung.

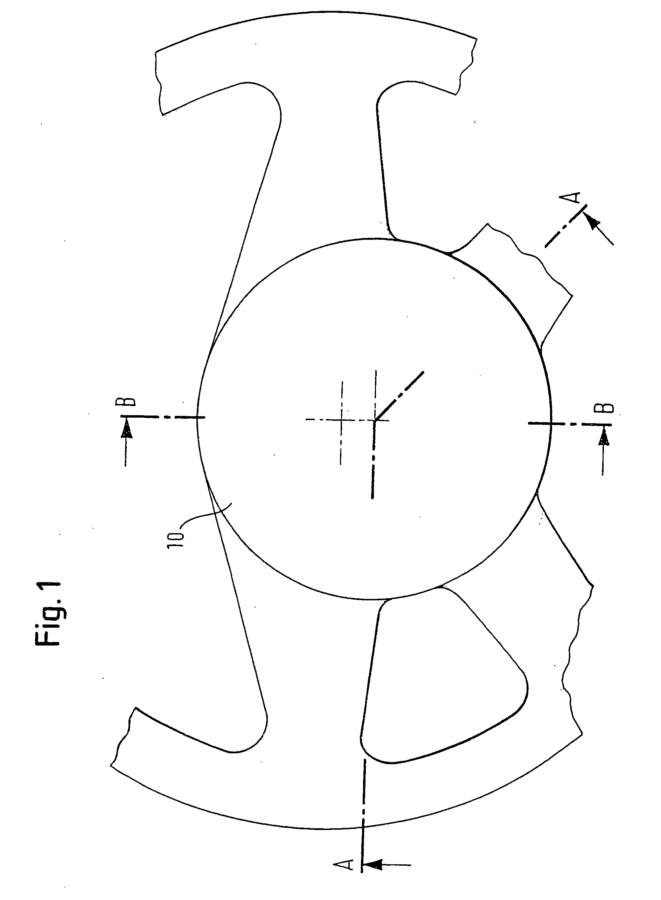

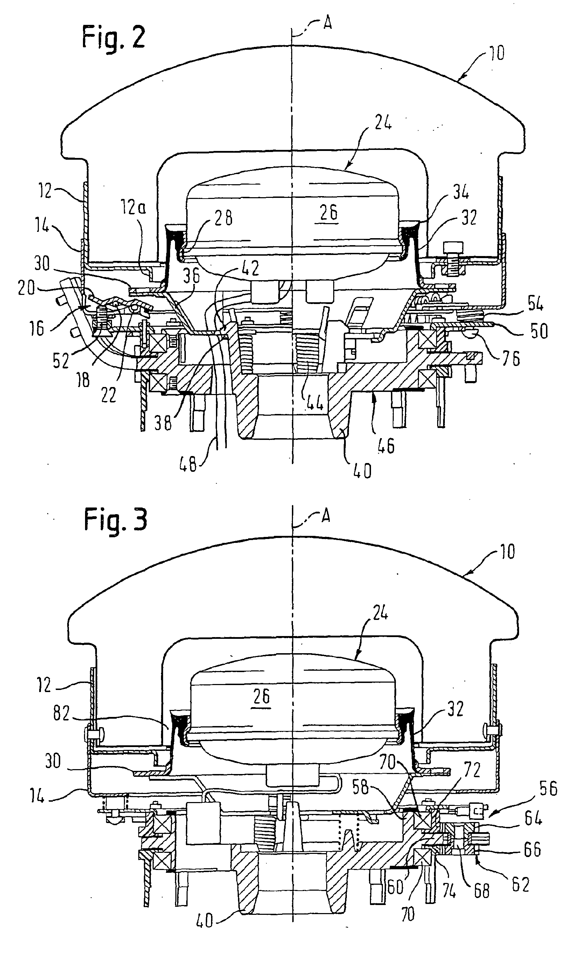

In den Figuren 1 bis 3 ist eine Lenkvorrichtung mit montiertem Gassackmodul 10 dargestellt. Das Gassackmodul 10 umfaßt einen Zusammenbau mit einer Abdeckung und einem Gassackkäfig (in den Figuren 2 und 3 nicht getrennt dargestellt) sowie einem Trägerblech 12 zur Befestigung eines Gassacks (nicht gezeigt) mit einem abgewinkelten Fortsatz 12a und einem Außenträgerblech 14. An das Außenträgerblech 14 sind mehrere Verriegelungseinrichtungen 16 mit einem um eine Achse 18 verschwenkbaren Verriegelungsteil 20 gekoppelt, dessen Funktion später erläutert wird. Das Verriegelungsteil 20 ist durch eine Feder 22 gemäß der Darstellung der Figur 2 bezüglich der Achse 18 gegen den Uhrzeigersinn vorgespannt.

Ferner ist eine Gasgeneratoreinheit 24 mit einem Gasgenerator 26, einem Montageblech 28 und einem ringförmigen Montageflansch 30 sowie einem elastischen Montagezylinder 32 mit außenseitigen Fortsätzen 34 vorgesehen. Die freien Ränder des elastischen Montagezylinders 32 sind einerseits mit dem Montageblech 28 und andererseits mit dem Montageflansch 30 verbunden, so daß der Gasgenerator 26 die Funktion eines Schwingungstilgers übernimmt. Zur Gasgeneratoreinheit 24 gehört auch ein am Montageflansch 30 befestigtes Verbindungsblech 36, an dessen Unterseite radial verschiebbare Federelemente 38 vorgesehen sind.

Die Lenkvorrichtung umfaßt schließlich eine drehfest mit einer Lenksäule des Fahrzeugs (nicht gezeigt) verbundene Nabe 40 mit angeformten Druckgußhaken 42 und im Inneren der Nabe 40 axial angeordnete Federn 44. Einstückig mit der Nabe 40 ist ein Lenkradskelett 46 ausgebildet. Eine in den Gasgenerator 26 geführte (in Figur 2 nur schematisch angedeutete) Zuleitung 48, über die der Gasgenerator 26 mit einer außerhalb der Lenkvorrichtung angeordneten Steuereinheit verbunden ist, ist neben der Nabe 40 aus der Lenkvorrichtung heraus- und einer Wickelfeder (nicht gezeigt) zugeführt. Eine Platte 50, in deren Außenbereich Bolzen 52 vorgesehen sind, ist gegenüber der Nabe 40 drehbar gelagert. Zwischen der Platte 50 und dem Außenträgerblech 14 sind Federn 54 vorgesehen.

Die Gesamtheit der drehfest mit der Lenksäule gekoppelten Bauteile wird im folgenden als Lenkradteil bezeichnet.

In Figur 3 ist ein Getriebe 56 zu sehen, deren Funktion ebenfalls später erläutert wird. In einem mit der Nabe 40 verbundenen, sich radial von einem axialen Abschnitt 58 weg erstreckenden Skelettabschnitt 60 ist ein Doppelritzelteil 62 gelagert, das zwei parallel angeordnete Ritzel 64, 66 aufweist, die über einen Achsenabschnitt 68 drehfest miteinander verbunden sind. An der Außenseite des axialen Skelettabschnitts 58 sind zwei Wälzlager 70 angebracht, von denen eines oberhalb und eines unterhalb des horizontalen Skelettabschnitts 60 angeordnet ist. Die Wälzlager 70 tragen zwei komplett um die Mittelachse A der Lenkvorrichtung umlaufende Zahnkränze 72, 74, die mit dem oberen Ritzel 64 bzw. mit dem unteren Ritzel 66 in Eingriff stehen. Der untere Zahnkranz 74 ist lenkstockfest gelagert, wogegen der obere Zahnkranz 72 an das Gassackmodul 10 gekoppelt ist.

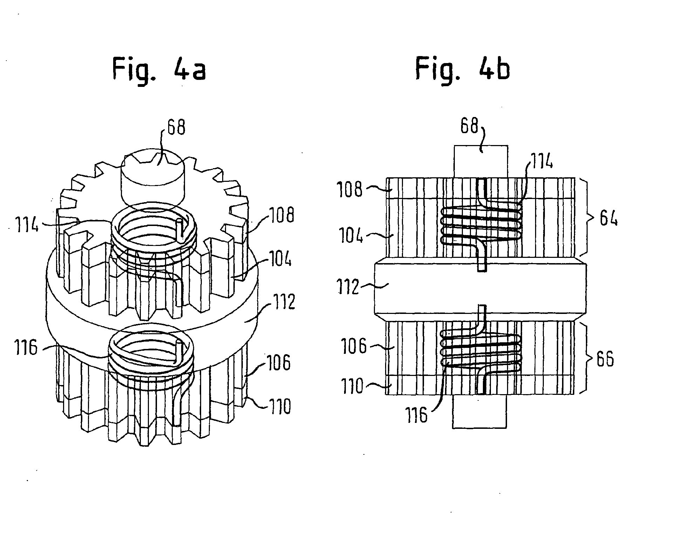

Das Doppelritzelteil 62 ist in den Figuren 4a und 4b im Detail dargestellt. Die Ritzel 64 und 66 sind jeweils aus einem Ritzelgrundkörper 104 bzw. 106 und einer Ritzelscheibe 108 bzw. 110 gebildet, die allesamt konzentrisch auf dem Achsenabschnitt 68 angeordnet sind. Zwischen den Ritzeln 64, 66 befindet sich ein Mittelabschnitt 112, der dem Skelettabschnitt 60 gegenüberliegt. Die beiden Ritzelgrundkörper 104, 106, der Mittelabschnitt 112 und der Achsenabschnitt 68 können als separate, fest miteinander verbundene Bauteile oder (zumindest teilweise) einstückig ausgeführt sein. In die Ritzelgrundkörper 104, 106 sind Torsionsfederelemente 114, 116 eingebettet. Ein Ende der Torsionsfederelemente 114, 116 greift in den Mittelabschnitt 112 ein, das andere Ende in die zugehörige Ritzelscheibe 108 bzw. 110, so daß die Torsionsfederelemente 114, 116 die Ritzelscheiben 108, 110 bezüglich der Drehrichtung gegen den zugehörigen Ritzelgrundkörper 104, 106 verspannen.

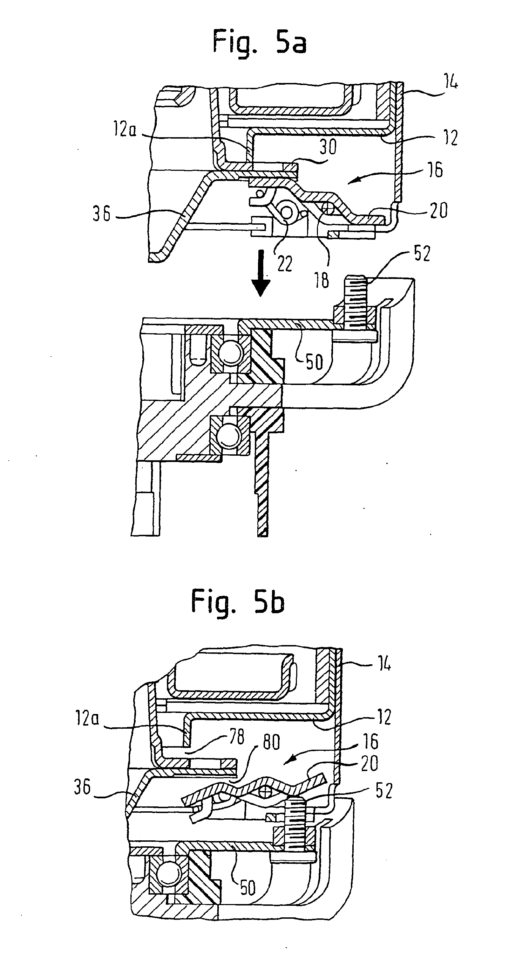

Im folgenden wird der Einbau des Gassackmoduls 10 beschrieben. Vor dem Einbau ist die Gasgeneratoreinheit 24 Bestandteil des Gassackmoduls 10. Wie in Figur 5a gezeigt, drückt das vorgespannte Verriegelungsteil 20 das Verbindungsblech 36 mit dem daran befestigten Montageflansch 30 fest gegen den Fortsatz 12a des Trägerblechs 12, so daß die Gasgeneratoreinheit 24 am Trägerblech 12 gehalten wird. Beim Einsetzen des Gassackmoduls 10 in Pfeilrichtung wird das Gassackmodul 10 auf herkömmliche Weise über Clipverbindungen 76 mit der Platte 50 verrastet. Während dieses Vorgangs wird die Gasgeneratoreinheit 24 automatisch vom Gassackmodul 10 an den Lenkradteil übergeben, wie nachfolgend erläutert wird.

Das Gassackmodul 10 wird beim Einsetzen gegen die Kraft der Federn 54 soweit überdrückt, bis durch den Druck des Fortsatzes 12a auf den Montageflansch 30 und das Verbindungsblech 36 die Federelemente 38 unter die nabenseitigen Haken 42 einrasten. Nach Aufhebung des Drucks auf das Gassackmodul 10 drücken die Federn 44 die Federelemente 38 sicher gegen die Haken 42. Gleichzeitig drücken die Federn 54 das eingerastete Gassackmodul 10 nach oben, so daß ein Spalt 78 zwischen dem Montageflansch 30 und dem Fortsatz 12a entsteht (siehe Figur 5b). Außerdem wird beim Einsetzen des Gassackmoduls 10 das Verriegelungsteil 20 durch den als Betätigungsteil dienenden Bolzen 52 gegen seine Vorspannung (gemäß der Darstellung der Figuren 5a, 5b gegen den Uhrzeigersinn) verschwenkt, so daß auch zwischen dem Verriegelungsteil 20 und dem Verbindungsblech 36 ein Spalt 80 entsteht. Somit ist die Gasgeneratoreinheit 24 vom Gassackmodul 10 entkoppelt und mittels der Federelemente 38 drehfest an die Nabe 42 gekoppelt, d.h. die Gasgeneratoreinheit 24 ist nunmehr Bestandteil des Lenkradteils. Die Zuleitung 48 wird bei einer Drehung des Lenkradteils zusammen mit dem Gasgenerator 26 mitgedreht und kann sich daher nicht verdrillen.

Damit das Gassackmodul 10 ortsfest gegenüber der jetzt mit dem Lenkradteil drehbaren Gasgeneratoreinheit 26 bleiben kann, ist zwischen dem elastischen Montagezylinder 32 und dem Gassackkäfig ein Spalt 82 vorgesehen. Der elastische Montagezylinder 32 mit seinen außenseitigen Fortsätzen 34 verhindert, daß durch diesen Spalt 82 bei einer Aktivierung des Gasgenerators 24 die ausströmenden Gase unkontrolliert nach unten abströmen, da die Fortsätze 34 durch die ausströmenden Gase fest an den Gassackkäfig gedrückt werden und so für eine ausreichende Abdichtung sorgen.

Die Relativbewegung des Lenkradteils gegenüber dem feststehenden Gassackmodul 10 wird durch das Getriebe 56 ermöglicht. Das an dem radialen Skelettabschnitt 60 gelagerte Doppelritzelteil 62 wird bei einer Drehbewegung des Lenkradteils mitgenommen. Da der untere Zahnkranz 74 lenkstockfest gelagert ist, läuft das untere Ritzel 66 dabei auf dem unteren Zahnkranz 74 ab. Die Drehung des unteren Ritzels 66 wird auf das über den Achsenabschnitt 68 drehfest verbundene obere Ritzel 64 übertragen. Dadurch wird der obere Zahnkranz 72 mit dem daran gekoppelten Gassackmodul 10 entgegengesetzt zur Drehrichtung des Lenkradteils gedreht, so daß sich das Gassackmodul 10 effektiv nicht mit dem Lenkradteil mitdreht, also ortsfest bleibt. Das Gassackmodul 10 ohne die Gasgeneratoreinheit 24 bildet im eingebauten Zustand somit einen gegenüber dem Lenkradteil feststehenden Mittelteil der Lenkvorrichtung.

Die Verspannung der Ritzelgrundkörper 104, 106 gegen die zugehörigen Ritzelscheiben 108, 110 mittels der Torsionsfederelemente 114, 116 gewährleistet einen spielfreien Lauf der Ritzel 64, 66 auf den Zahnkränzen 72, 74. Durch die Torsionsfederelemente 114, 116 wird immer entweder die Verzahnung der Ritzelgrundkörper 104, 106 oder die Verzahnung der Ritzelscheiben 108, 110 an die Verzahnung der Zahnkränze 72, 74 gedrückt. Dies gilt insbesondere bei einem Wechsel der Drehrichtung.

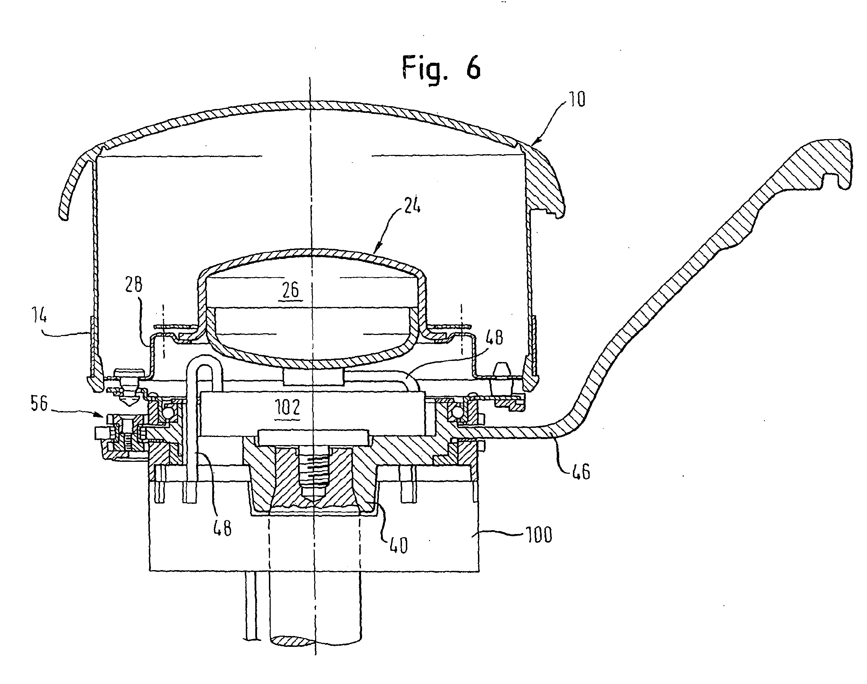

In Figur 6 ist eine alternative Fahrzeuglenkvorrichtung dargestellt, wobei die gleichen Bezugszeichen wie in den Figuren 1 bis 3 verwendet wurden, soweit sie einander entsprechende Bauteile bezeichnen.

Die Lenkvorrichtung entspricht weitgehend der zuvor beschriebenen Lenkvorrichtung mit dem Unterschied, daß die Gasgeneratoreinheit 24 hier fester Bestandteil des Gassackmoduls 10 ist, also nicht bei der Montage des Gassackmoduls 10 an den drehbaren Lenkradteil übergeben wird. Dementsprechend dreht sich der Gasgenerator 26 bei einer Drehung des Lenkradteils nicht mit diesem mit. Das Problem der Verkabelung des Gasgenerators 26 ist hier durch eine Nebenwickelfeder 100 gelöst, die zusätzlich zu einer Hauptwickelfeder 102 vorgesehen ist.

Das Prinzip der Verkabelung von Komponenten, die in oder an einem Lenkrad ohne feststehenden Mittelteil angeordnet sind, mit Hilfe einer Wickelfeder ist hinlänglich bekannt und wird daher an dieser Stelle nicht näher erläutert. Da bei der in Figur 5 dargestellten Lenkvorrichtung die Gasgeneratoreinheit 24 aber zum feststehenden Mittelteil des Lenkrads gehört, ist eine derartige Verkabelung mit nur einer Wickelfeder hier nicht zweckmäßig.

Die Zuleitung 48 für den Gasgenerator 26, über die der Gasgenerator 26 mit einer außerhalb der Lenkvorrichtung angeordneten Steuereinheit elektrisch verbunden ist, ist daher von der in einem nicht-drehbaren Abschnitt der Lenkvorrichtung angeordneten Hauptwickelfeder 102 in die im drehbaren Lenkradteil angeordnete Nebenwickelfeder 100 und von dort in den Gasgenerator 26 geführt. Selbstverständlich können auch weitere Zuleitungen für andere Lenkradfunktionseinheiten, wie etwa eine Hupe oder Multifunktionsschalter, auf die gleiche Weise verlegt sein.

## Patentansprüche

1. Getriebe für eine Fahrzeuglenkvorrichtung mit feststehendem Mittelteil, mit einem an einen Achsenabschnitt (68) gekoppelten Ritzel (64; 66), **dadurch gekennzeichnet, daß** das Ritzel (64; 66) aus zwei verzahnten Ritzelteilen (104, 108; 106, 110) gebildet ist, die mittels eines Federelements (114; 116) gegeneinander verspannt sind.

2. Getriebe nach Anspruch 1, **dadurch gekennzeichnet, daß** das erste Ritzelteil ein drehfest mit dem Achsenabschnitt (68) verbundener Ritzelgrundkörper (104; 106) ist.

3. Getriebe nach Anspruch 2, **dadurch gekennzeichnet, daß** das zweite Ritzelteil eine konzentrisch zum Ritzelgrundkörper (104; 106) angeordnete Ritzelscheibe (108; 110) ist, in die ein erstes Ende des Federelements (114; 116) eingreift.

4. Getriebe nach einem der vorhergehenden Ansprüche, **dadurch gekennzeichnet, daß** ein zweites Ende des Federelements (114; 116) in ein drehfest mit dem Achsenabschnitt (68) verbundenes Teil eingreift.

5. Getriebe nach einem der vorhergehenden Ansprüche, **dadurch gekennzeichnet, daß** auf dem Achsenabschnitt (68) ein zweites Ritzel (66; 64) angeordnet ist, das den gleichen Aufbau wie das erste Ritzel (64; 66) aufweist.

6. Getriebe nach Anspruch 5, **dadurch gekennzeichnet, daß** zwischen den beiden Ritzeln (64, 66) ein Mittelabschnitt (112) vorgesehen ist, in den die zweiten Enden der Federelemente (114, 116) eingreifen.

7. Getriebe nach Anspruch 6, **dadurch gekennzeichnet, daß** wenigstens die Ritzelgrundkörper (104, 106) und der Mittelabschnitt (112) einstückig ausgeführt sind.

8. Getriebe nach Anspruch 7, **dadurch gekennzeichnet, daß** die Ritzelgrundkörper (104, 106), der Mittelabschnitt (112) und der Achsenabschnitt (68) einstückig ausgeführt sind.

9. Lenkvorrichtung mit einem drehfest an eine Lenksäule gekoppelten Lenkradteil, einem gegenüber einer Drehung des Lenkradteils feststehenden Mittelteil und einem Getriebe (56) nach einem der vorhergehenden Ansprüche.

10. Lenkvorrichtung nach Anspruch 9, **dadurch gekennzeichnet, daß** das Getriebe (56) an dem drehfest an die Lenksäule gekoppelten Lenkradteil gelagert ist.

11. Lenkvorrichtung nach Anspruch 10, **dadurch gekennzeichnet, daß** die beiden Ritzel (64, 66) mit zwei Zahnkränzen (72, 74) kämmen, wobei der erste Zahnkranz (72) an den feststehenden Mittelteil und der zweite Zahnkranz (74) fahrzeugfest gelagert ist.
